Europäisches Patentamt

European Patent Office

Office européen des brevets

(19)

(11) Numéro de publication: **0 089 252**
**B1**

(12)                     **FASCICULE DE BREVET EUROPEEN**

(45) Date de publication du fascicule du brevet:
04.09.85

(51) Int. Cl.⁴: **B 01 J 23/52**, C 10 G 45/50

(21) Numéro de dépôt: **83400340.2**

(22) Date de dépôt: **18.02.83**

(54) Nouveau catalyseur supporté palladium-or, sa préparation et son utilisation dans les réactions d'hydrogénation sélective d'hydrocarbures dioléfiniques et/ou acétyléniques.

(30) Priorité: **15.03.82 FR 8204477**

(43) Date de publication de la demande:
**21.09.83 Bulletin 83/38**

(45) Mention de la délivrance du brevet:
**04.09.85 Bulletin 85/36**

(84) Etats contractants désignés:
**DE GB IT NL**

(56) Documents cités:
**FR - A - 2 482 953**
**GB - A - 802 100**
**US - A - 3 974 102**
**US - A - 4 136 062**

(73) Titulaire: **PRO-CATALYSE, 4, Avenue de Bois Préau B.P. 311, F-92502 Rueil-Malmaison (FR)**

(72) Inventeur: **Boitiaux, Jean-Paul, 31, rue du Moulin Vert, F-75014 Paris (FR)**
Inventeur: **Cosyns, Jean, 50, Route D'Herbeville, F-78580 Maule (FR)**

## Description

La présente invention concerne la préparation d'un catalyseur palladium-or sélectif, stable et résistant au soufre, ainsi que son utilisation dans l'hydrogénation sélective d'hydrocarbures dioléfiniques et/ou acétyléniques.

Les procédés de conversion d'hydrocarbures à haute température tels que, par exemple, le craquage à la vapeur, la réduction de viscosité, le cokage et le craquage catalytique produisent une grande quantité d'hydrocarbures insaturés oléfiniques et dioléfiniques gazeux et liquides tels que, par exemple, l'éthylène, le propylène, le butadiène, les butènes ainsi que des hydrocarbures bouillant dans la gamme des essences et riches également en composés dioléfiniques et oléfiniques.

Les hydrocarbures gazeux oléfiniques et dioléfiniques de deux à quatre atomes de carbone obtenus par ces procédés contiennent également une certaine quantité d'hydrocarbures acétyléniques. La teneur en ces hydrocarbures varie en fonction de la sévérité du traitement de conversion mais est toujours trop faible pour que l'on envisage de les séparer et de les utiliser comme tels pour la pétrochimie, par exemple. Cependant leur présence à côté des hydrocarbures oléfiniques et dioléfiniques rend impossible la valorisation de ces derniers. Seule pourrait être envisagée une utilisation comme simple combustible ce qu'on écarte maintenant de plus en plus pour des raisons économiques évidentes. On cherche donc à valoriser les hydrocarbures oléfiniques légers soit comme base pétrochimique soit comme constituant de carburant.

C'est ainsi, par exemple, que le propylène issu du craquage catalytique peut être utilisé comme monomère pour la production du polypropylène ou comme réactif pour la production de dimères constituant une excellente base de carburant.

D'une manière générale donc, les valorisations pétrochimiques ou comme carburant imposent un traitement d'hydrogénation sélective de manière à transformer sélectivement les impuretés les plus insaturées telles que, par exemple, les acétyléniques dans les coupes oléfiniques et dioléfiniques ou les dioléfines dans les coupes oléfiniques.

Cependant les nouveaux développements, liés notamment à la crise pétrolière, posent de nouveaux problèmes dans le domaine des hydrogénations, que les catalyseurs actuels ne permettent pas de résoudre de façon satisfaisante.

Un premier problème est lié au développement des procédés de conversion des pétroles lourds à haute température tels que réduction de viscosité, cokage ou craquage catalytique, qui provoque l'apparition de coupes oléfiniques plus riches en impuretés hétéroatomiques telles que les composés sulfurés.

Alors que les coupes légères ($C_2$, $C_3$, $C_4$) provenant de ces procédés étaient anciennement utilisées essentiellement comme combustible, on cherche maintenant à mieux les valoriser en les transformant soit en produits de base pour la chimie, soit en base pour carburants.

Cela impose donc l'intervention de traitements d'hydrogénation sélective. Cependant la présence d'impuretés sulfurées provoque un empoisonnement progressif des catalyseurs les plus couramment utilisés tels que le palladium supporté et oblige soit à augmenter considérablement la quantité de catalyseur soit à effectuer de nombreuses régénérations coûteuses en énergie.

Un deuxième problème, lié aussi à la nécessité de valoriser au mieux les coupes pétrolières, est également apparu. Ainsi la nécessité d'augmenter les rendements en oléfines a conduit à augmenter les températures des fours de craquage à la vapeur; cela entraîne dans les diverses coupes produites une teneur plus élevée en composés acétyléniques et dioléfiniques. En particulier, le coupe $C_4$ brute du steam-cracking contient à côté du butadiène et des butènes, du vinylacétylène en proportion relativement élevée (1 à 2% en poids). Cela entraîne dans la distillation extractive du butadiène, une perte importante de ce composé qui est utilisé pour diluer le concentrat acétylénique qui sort en fond de colonne. Cette dilution est rendue indispensable pour des raisons de sécurité et cette coupe, qui n'a malheureusement pas de valorisation chimique propre, est actuellement le plus souvent brûlée.

Pour diminuer cette perte de butadiène, on cherche donc à hydrogéner préalablement le vinylacétylène de manière à abaisser le plus possible sa teneur tout en ne consentant qu'à une perte en butadiène aussi faible que possible. Les catalyseurs classiques à base de palladium permettent, dans certaines conditions, d'atteindre des rendements en butadiène produit égaux ou supérieurs à 99% par rapport au butadiène entré dans le réacteur d'hydrogénation.

On constate cependant que ce type de catalyseur se désactive assez rapidement par suite d'une extraction progressive du palladium par la charge; cette extraction du métal est d'autant plus importante que la teneur en vinylacétylène de la charge et plus élevée.

Le troisième problème rencontré est lié aussi à l'augmentation de concentration des hydrocarbures acétyléniques dans les coupes légères de vapocraquage. On a constaté en effet, avec les catalyseurs au palladium habituellement utilisés, une formation d'oligomères parallèle à l'hydrogénation, cette formation étant d'autant plus importante que la teneur en acétyléniques à hydrogéner est plus grande. Cette réaction parasite a un double inconvénient, le premier d'abaisser le rendement en produit oléfinique recherché (cas du propylène par exemple), le second de provoquer un encrassement progressif du catalyseur qui oblige à de fréquentes régénérations (cas de l'hydrogénation des $C_2$ en phase gazeuse).

En résumé, les catalyseurs usuels au palladium présentent trois principaux inconvénients:

— le premier résultant de leur trop grande sensibilité à l'empoisonnement par les composés sulfurés

— le deuxième étant la dissolution progressive du palladium dans les coupes $C_4$ contenant du vinylacétylène

— le troisième provenant de la trop grande formation d'oligomères.

On a déjà proposé l'emploi, en hydrogénation sélective, de catalyseurs renfermant du palladium et de l'or (FR 2482953, GB 802100). L'or est introduit sous forme d'acide chloraurique. Ces catalyseurs sont plus actifs et plus sélectifs que les catalyseurs au palladium seul, mais le palladium tend à être chassé assez rapidement du catalyseur par les hydrocarbures acétyléniques tels que le vinylacétylène. En outre, la formation d'oligomères est importante. Des catalyseurs peuvent être préparés en introduisant simultanément le palladium et l'or dans un support et en prenant des précautions pour éviter la présence de chlore dans le catalyseur fini (US 3974102 et 4136062); l'activité de ces catalyseurs laisse à désirer.

L'objet de l'invention est la préparation d'un catalyseur qui présente à la fois une grande résistance à l'empoisonnement par le soufre, une grande stabilité vis-à-vis de l'élution par le vinylacétylène ainsi qu'une faible tendance à la formation d'oligomères.

Le procédé de préparation de ce catalyseur comprend les étapes suivantes: on incorpore un composé de palladium à un support minéral, on calcine en présence d'un gaz contenant de l'oxygène, on traite par un réducteur, on introduit un composé halogéné d'or, on traite par un réducteur, on traite par un composé à réaction basique et on calcine en présence d'un gaz contenant de l'oxygène.

On abaisse ainsi la teneur en halogène du catalyseur au-dessous de 10 ppm (parties par million) en poids.

La teneur pondérale en palladium du catalyseur est comprise entre 0,03 et 1% et sa teneur pondérale en or entre 0,003 et 0,3%.

Le support peut être l'un des supports de catalyseurs d'hydrogénation connus dans l'art, par exemple la silice ou l'alumine. On préfère l'alumine et plus particulièrement une alumine de surface comprise entre 1 et 100 m²/g.

Le composé du palladium peut être l'un des composés connus de ce métal, de préférence un composé soluble dans un solvant tel que eau, alcool ou hydrocarbure, par exemple un nitrate, un chlorure ou un acétylacétonate.

Le composé d'or est un halogénure, en particulier un chlorure, utilisé par exemple sous forme de solution dans l'eau, dans un alcool ou dans un acide (chlorhydrique, nitrique, etc., ou leur mélange).

La calcination en présence d'un gaz contenant de l'oxygène, par exemple en présence d'air, peut se faire à 100-500°C environ, de préférence à 250-350°C environ.

La réduction peut se faire soit à basse température, au moyen, par exemple, d'hydrazine ou d'acide formique, soit à température plus élevée en effectuant une réduction par l'hydrogène.

Les réductions par l'hydrogène peuvent se faire à 100-400°C, de préférence 150-300°C.

La réduction en phase liquide par l'hydrazine ou l'acide formique peut être effectuée à une température comprise, par exemple, entre 10 et 100°C.

Le traitement par un composé à réaction basique, par exemple une solution aqueuse d'ammoniac (technique préférée), d'amine ou de carbonate ou bicarbonate de sodium, potassium ou ammonium peut être effectué par exemple à 0-100°C ou au-dessus à condition d'opérer sous pression.

Après lavage par la solution d'ammoniac ou d'autre agent basique, on sèche et on calcine, par exemple vers 100 à 500°C, de préférence 250 à 350°C, comme déjà mentionné.

On décrit ci-après, à titre d'exemple, un mode préféré de préparation du catalyseur:

On traite le support, de préférence de l'alumine, par une solution d'un composé de palladium, on sèche, on calcine et on réduit par l'hydrogène. On imprègne ensuite par une solution aqueuse, alcoolique ou hydroalcoolique d'acide chloroaurique, on réduit, de préférence par l'hydrazine ou l'acide formique, on traite par le composé à réaction basique, on sèche et on calcine.

Avant emploi, on procède utilement à une réduction selon l'une quelconque des méthodes connues. On peut par exemple utiliser l'hydrogène à une température de 100 à 400°C, de préférence 150 à 250°C.

Les exemples qui suivent, non limitatifs, illustrent l'invention.

La microscopie électronique à balayage par transmission (STEM) couplée à un analyseur de rayonnement X indique la présence de particules bimétalliques palladium-or sur les catalyseurs B, C, D, F et G.

*Exemple 1:*

Dans cet exemple, on choisit un support d'alumine, se présentant sous forme de billes de 2 à 4 mm de diamètre, d'une surface spécifique de 70 m²/g, d'un volume poreux total de 0,6 cm³/g et ayant un diamètre moyen de pores de 200 angströms ($200 \times 10^{-10}$ m).

On le trempe dans une quantité de solution benzénique d'acétylacétonate de palladium égale à trois fois son volume poreux et dont la concentration a été calculée pour obtenir sur le catalyseur fini une teneur de 0,2% en poids de ce métal. On laisse reposer pendant 8 heures, au bout de ce temps, on analyse la solution surnageante dans laquelle la concentration en palladium est trouvée dans l'ordre de 100 ppm en poids ce qui indique que la quasi-totalité de l'acétylacétonate de palladium s'est complexée sur le support.

La solution surnageante est éliminée et l'on sèche le catalyseur dans une étuve aérée à 120°C pendant 6 heures. Ensuite le catalyseur est transféré dans un four tubulaire, où il est maintenu sous courant d'air à 300°C pendant 2 heures. Dans le même four, l'air est chassé par de l'azote puis remplacé par un courant d'hydrogène qui balaye le catalyseur pendant 2 heures à la température de 300°C. On obtient ainsi le catalyseur A.

Un échantillon de catalyseur (A) est ensuite plongé dans une quantité de solution aqueuse

d'acide tétrachloroaurique (HAuCl$_4$) égale à trois fois son volume poreux et dont la concentration a été choisie pour obtenir sur le catalyseur fini une teneur de 0,02% en poids d'or. On laisse reposer jusqu'à décoloration complète de la solution surnageante. Après 3 heures, la solution est analysée par absorption atomique: l'or est indétectable ($\leqslant$ 10 ppm).

La solution surnageante est éliminée et le catalyseur est ensuite séché, calciné puis réduit de la même façon que la catalyseur au palladium. Le catalyseur ainsi préparé est analysé par fluorescence X; il contient 110 ppm en poids de chlore et constitue le catalyseur dénommé B du tableau 1.

Une partie de ce catalyseur est ensuite lavé avec une solution de NH$_4$OH normale de manière à éliminer la quasi-totalité du chlore. On arrête l'opération lorsqu'on ne détecte plus d'ions chlore dans la solution de lavage (absence de trouble lorsqu'on ajoute du nitrate d'argent).

Après lavage à l'eau distillée, le catalyseur est ensuite séché, calciné et réduit dans les mêmes conditions que le catalyseur au palladium. On obtient ainsi le catalyseur C du tableau 1. L'analyse par fluorescence X de ce catalyseur indique une teneur en chlore inférieure à 10 ppm en poids.

Ces trois catalyseurs A, B et C sont utilisés pour hydrogéner en continu et en phase gazeuse une charge contenant 10% d'isoprène dilué dans du n-heptane.

Les conditions opératoires sont les suivantes: pression atmosphérique, température de 100°C, débit de charge: 60 cm$^3$/h, débit d'hydrogène 25 l/h, charge de catalyseur 1,5 g. Les résultats obtenus sur une charge exempte de soufre sont les suivants (tableau 1).

L'activité est exprimée en moles d'isoprène transformées par heure et par gramme de catalyseur.

Tableau 1

| Catalyseur | Composition | Activité (Isoprène→Méthylbutènes) |
|---|---|---|
| A | 0,2% palladium | 7·10$^{-3}$ mol/h/g catalyseur |
| B | 0,2% palladium, 0,02% or et 110 ppm chlore | 11,5·10$^{-3}$ mol/h/g catalyseur |
| C | 0,2% palladium, 0,02% or et <10 ppm chlore | 14·10$^{-3}$ mol/h/g catalyseur |

La sélectivité en méthylbutènes, pour les trois catalyseurs ci-dessus, était de 98%.

*Exemple 2:*

Les trois catalyseurs A, B et C de la préparation précédente sont testés dans les mêmes conditions sur la même charge, mais contenant 1000 ppm en poids de thiiophène. Les résultats obtenus sont présentés dans le tableau 2.

Tableau 2

| Catalyseur | Activité (Isoprène→Méthylbutènes) |
|---|---|
| A | 2,7·10$^{-3}$ mol/h/g catalyseur |
| B | 6,1·10$^{-3}$ mol/h/g catalyseur |
| C | 8,2·10$^{-3}$ mol/h/g catalyseur |

La sélectivité en méthylbutènes, pour les trois catalyseurs ci-dessus, était de 98%.

*Exemple 3:*

On prépare selon la méthode de l'exemple 1 (catalyseur C) des catalyseurs palladium-or déchlorés (< 10 ppm de chlore) à teneurs variables en or, la teneur en palladium restant fixée à 0,2% en poids.

1,5 g de ces catalyseurs réduits sont broyés et introduits dans un réacteur agité du type Grignard. On teste leur activité en hydrogénation du butyne-1 en solution dans du n-heptane sous 8 bars de pression totale à 20°C.

Le tableau 3 indique l'influence de la teneur en or sur l'activité des catalyseurs dans l'hydrogénation du butyne-1 en butène-1.

Tableau 3

| Catalyseur | 0,2% Pd | 0,2% Pd + 0,02% Au | 0,2% Pd + 0,03% Au | 0,2% Pd + 0,1% Au |
|---|---|---|---|---|
| Activité Butyne-1→Butène-1 10$^{-3}$ mol/h/g catalyseur | 5,5 | 14,4 | 14,8 | 12,0 |

La réaction d'hydrogénation du butyne-1 en butène est sélective pratiquement à 100% aussi longtemps que tout le butyne n'est pas consommé.

Lorsque celui-ci a disparu on poursuit l'hydrogénation du butène-1 formé en butane.

Le tableau 4 montre l'influence de l'or sur la vitesse de cette réaction consécutive.

*Tableau 4*

| Catalyseur | 0,2% Pd | 0,2% Pd + 0,02% Au | 0,2% Pd + 0,03% Au | 0,2% Pd + 0,1% Au |
|---|---|---|---|---|
| Activité Butyne-1→butane $10^{-3}$ mol/h/g catalyseur | 55 | 47,5 | 40 | 31 |

On voit ici que l'adjonction d'or diminue l'hydrogénation du butène-1 en butane alors qu'elle favorise l'hydrogénation du butyne-1 en butène-1.

L'adjonction d'or au palladium permet donc d'augmenter la sélectivité de production d'oléfine en minimisant la formation de paraffine.

*Exemple 4:*

Des catalyseurs préparés comme à l'exemple 1 (catalyseur C) sont utilisés pour hydrogéner sélectivement les dioléfines en oléfines dans une essence de vapocraquage.

La réaction est faite en lit fixe à 100°C, sous 30 bars de pression, à une vitesse spatiale liquide de 8 volumes/volume de catalyseur par heure.

La performance du catalyseur est suivie par mesure de la «Maleic Anhydride Value» ou M.A.V.

selon la méthode UOP n° 326-58, la M.A.V. étant proportionnelle à la teneur en dioléfines.

La vitesse d'hydrogénation s'en déduit par l'expression suivante:

$$\text{Activité (h}^{-1}): \text{V.V.H. log.} \frac{MAV_o}{MAV_p}$$

avec $MAV_o$ = MAV de la charge et $MAV_p$ = MAV du produit.

La charge utilisée est une coupe essence 40-180°C, de densité 0,827 et de $MAV_o$ 137. Sa composition globale est de 9% de paraffines, 7% d'oléfines, 18% de dioléfines et 66% d'aromatiques.

Le tableau 5 présente l'influence de la teneur en or sur l'activité hydrogénante des catalyseurs à 0,2% palladium.

*Tableau 5*

| Teneur en or (% poids) | 0 | 0,03 | 0,05 | 0,1 |
|---|---|---|---|---|
| Activité hydrogénante $h^{-1}$ | 4,3 | 5,8 | 7,2 | 4,6 |

*Exemple 5:*

On traite par l'hydrogène en continu, une coupe $C_4$ contenant 48% de butadiène et 1,4% de vinylacétylène (VAC) à une température de 40°C et sous une pression de 8 bars, pour hydrogéner sélectivement le vinylacétylène. La vitesse spatiale de la coupe $C_4$ liquide est de 5 volumes/volume de catalyseur/heure et le rapport molaire hydrogène sur VAC de 1,1.

Trois catalyseurs préparés comme indiqué dans l'exemple 1 (catalyseurs A, B, C) sont testés pendant 800 heures dans ces conditions. Après quoi on mesure leur teneur en palladium.

Le tableau 6 suivant indique les teneurs avant et après test:

*Tableau 6*

| Catalyseur | Teneur en Palladium du catalyseur neuf | Teneur en Palladium du catalyseur usagé |
|---|---|---|
| 0,2% Palladium | 0,2 | 0,1 |
| 0,2% Palladium + 0,03% or non déchloré | 0,2 | 0,12 |
| 0,2% Palladium + 0,03% or déchloré (<10 ppm chlore) | 0,2 | 0,19 |

On voit que le catalyseur déchloré Pd-Au est plus stable que les deux autres catalyseurs.

*Exemple 6:*

On traite par l'hydrogène une coupe $C_2$ conte-

nant 0,5% en poids d'acétylène dans l'éthylène à une température de 100°C sous 25 bars de pression, le rapport molaire $H_2/HC$ étant maintenu à 4 à l'entrée du réacteur, et la vitesse spatiale gazeuse étant de 6000 $h^{-1}$, pour hydrogéner sélectivement l'acétylène.

Pour une teneur en acétylène résiduaire de 700 ppm en poids, à la sortie du réacteur, les teneurs en huiles lourdes résiduelles varient selon le type de catalyseur utilisé.

Pour une teneur de 0,2% de palladium sur alumine (catalyseur A), on récupère 500 ppm d'oligomères alors que pour un catalyseur déchloré à 0,2% de palladium et 0,1% d'or, préparé comme à l'exemple 1, on réduit cette oligomérisation à 200 ppm.

*Exemple 7:*

On prend une partie du catalyseur B préparé dans l'exemple 1, après le traitement de séchage. On imprègne ensuite cet échantillon par une solution aqueuse de carbonate de sodium de manière à déposer une quantité égale à 0,6% en poids de sodium (0,006 g par g) par rapport à l'alumine de départ. On sèche à nouveau le catalyseur, on le calcine et on le réduit dans les conditions de l'exemple 1.

Le catalyseur ainsi préparé est essayé en hydrogénation de l'isoprène dans les mêmes conditions que celles de l'exemple 1. L'activité obtenue (isoprène → méthylbutènes) est trouvée égale à $12,5 \cdot 10^{-3}$ mol/h/g catalyseur.

Les méthylbutènes représentent 96% des produits d'hydrogénation.

On voit que cette activité est nettement inférieure à celle du catalyseur C (tableau 1) pour lequel un lavage à l'ammoniaque a été effectué.

*Exemple 8:*

Dans cet exemple, on choisit un support d'alumine identique à celui de l'exemple 1.

Un échantillon de ce support est trempé dans une solution aqueuse de nitrate de palladium de volume égal au volume poreux et dont la concentration a été calculée pour obtenir sur le catalyseur fini une teneur de 0,2% en poids de ce métal. On laisse reposer pendant 8 heures, temps au bout duquel on sèche le catalyseur dans une étuve à 120°C pendant 6 heures puis on le calcine sous courant d'air sec 2 heures à 300°C dans un réacteur tubulaire. Dans le même four, l'air est chassé par de l'azote puis remplacé par un courant d'hydrogène qui balaye le catalyseur pendant 2 heures à 150°C.

On plonge alors le solide obtenu dans une quantité de solution aqueuse d'acide tétrachloroaurique égale au volume poreux du support et dont la concentration a été choisie pour obtenir sur le catalyseur fini une teneur de 0,02% en poids d'or. On laisse reposer jusqu'à décoloration complète de la solution surnageante. Le catalyseur obtenu est séché, calciné à 300°C puis réduit à 150°C pendant 2 heures sous courant d'hydrogène.

Le solide obtenu est ensuite lavé par une solution ammoniacale comme dans l'exemple 1 pour éliminer les résidus de chlore encore présents, séché, calciné et réduit comme précédemment.

On obtient ainsi le catalyseur D du tableau 7.

*Exemple 8bis (comparaison):*

Un autre échantillon du support d'alumine de l'exemple 1 est trempé dans une solution aqueuse mixte de nitrate de palladium et d'acide tétrachloroaurique dont les concentrations respectives sont choisies de telle façon que la teneur finale du catalyseur obtenu soit 0,2% en poids de palladium et 0,02% en poids d'or. La quantité de solution utilisée est égale au volume poreux du support.

La solution est laissée au contact du support pendant 8 heures après quoi on sèche à l'étuve à 120°C pendant 6 heures le solide obtenu. Après séchage le solide est transféré dans un four tubulaire, calciné 2 heures sous air sec à 300°C puis réduit 2 heures à 150°C sous courant d'hydrogène.

Le solide obtenu est lavé de la même façon que dans l'exemple 1 par une solution ammoniacale, séché, calciné à 300°C puis réduit à 150°C pendant 2 heures sous courant d'hydrogène. Le catalyseur obtenu est le catalyseur E du tableau 7.

Les catalyseurs D et E sont testés en hydrogénation de l'isoprène dans les mêmes conditions que dans l'exemple 1. Les produits d'hydrogénation sont pour les deux catalyseurs des méthylbutènes à 98%.

Les résultats obtenus sont rassemblés dans le tableau 7.

*Tableau 7*

| Catalyseur | Activité (Isoprène→Méthylbutènes) |
|---|---|
| D | $14,2 \cdot 10^{-3}$ mol/h/g catalyseur |
| E | $6,5 \cdot 10^{-3}$ mol/h/g catalyseur |

*Exemple 9:*

Dans cet exemple, on choisit un support d'alumine identique à celui de l'exemple 1.

On imprègne ce support avec 0,2% de palladium de la même façon que pour la préparation du catalyseur D de l'exemple 8 et l'on procède de la même manière jusqu'à la calcination sous air sec à 300°C qui précède l'introduction de l'or.

Le solide calciné est réduit à température ambiante par un excès d'une solution aqueuse d'hydrazine à 3% en poids.

Lorsque le dégagement gazeux est terminé la réduction est considérée comme terminée; on élimine l'excès d'hydrazine et on lave à l'eau distillée le solide obtenu.

On procède alors à l'imprégnation d'or sous la forme d'une solution aqueuse d'acide tétrachloroaurique, le volume de la solution étant égal au volume poreux. La concentration de cette solution est choisie de façon à obtenir 0,02% d'or sur le catalyseur final.

On laisse reposer jusqu'à décoloration complète de la solution surnageante.

On réduit alors à nouveau le solide obtenu à l'hydrazine diluée dans l'eau. Après lavage à l'eau distillée on lave le catalyseur avec la même solution ammoniacale que dans l'exemple 1. Le solide obtenu est filtré, séché 6 heures dans une étuve à 120°C puis transféré dans un réacteur tubulaire. Le catalyseur est alors calciné sous air sec 2 heures à 300°C puis réduit sous courant d'hydrogène 2 heures à 150°C. On obtient ainsi le catalyseur F.

Testé dans les mêmes conditions que dans l'exemple 1 le catalyseur F a une activité de $13,7 \cdot 10^{-3}$ mol/h/g catalyseur (sélectivité 98%).

*Exemple 10:*

On procède de la même façon que dans l'exemple 9 en remplaçant l'hydrazine par un excès de solution aqueuse d'acide formique à 0,1%, toutes les autres étapes étant maintenues identiques.

On obtient de cette manière le catalyseur G. Testé dans les mêmes conditions que dans l'exemple 1, le catalyseur G a une activité de $14,5 \cdot 10^{-3}$ mol/h/g catalyseur (sélectivité 98%).

## Revendications

1. Procédé de préparation d'un catalyseur, caractérisé en ce qu'il comprend les étapes suivantes: on mélange un composé de palladium à un support minéral, on calcine en présence d'un gaz contenant de l'oxygène, on traite par un réducteur, on mélange un composé halogéné d'or à la composition résultante, on traite par un réducteur, on traite par un composé à réaction basique de manière à abaisser la teneur en halogène du catalyseur au-dessous de 10 ppm (parties par million) en poids, et on calcine en présence d'un gaz contenant de l'oxygène, les composés de palladium et d'or étant utilisés en proportion convenable pour que le catalyseur renferme 0,03 à 1% en poids de palladium et 0,003 à 0,3% en poids d'or.

2. Procédé selon la revendication 1, dans lequel le composé à réaction basique est l'ammoniac, une amine ou un carbonate ou bicarbonate d'ammonium, de sodium ou de potassium, ledit composé étant utilisé en solution aqueuse.

3. Procédé selon la revendication 2, dans lequel le composé à réaction basique est l'ammoniac en solution aqueuse.

4. Procédé selon l'une des revendications 1 à 3, dans lequel les calcinations sont effectuées à 100-500°C.

5. Procédé selon l'une des revendications 1 à 4, dans lequel le réducteur est l'hydrogène, utilisé à 100-400°C.

6. Procédé selon l'une des revendications 1 à 4, dans lequel le réducteur est l'acide formique ou l'hydrazine, utilisés à 10-100°C.

7. Procédé selon l'une quelconque des revendications 1 à 6, dans lequel le palladium est introduit sous forme d'acétylacétonate.

8. Procédé selon l'une quelconque des revendications 1 à 7, dans lequel le support est une alumine de surface comprise entre 1 et 100 m²/g.

9. Catalyseur, obtenu selon le procédé de l'une des revendications 1 à 8, contenant de 0,03 à 1% en poids de palladium et 0,003 à 0,3% en poids d'or, sur un support minéral.

10. Utilisation du catalyseur préparé suivant l'une quelconque des revendications 1 à 8, ou du catalyseur selon la revendication 9, dans une réaction d'hydrogénation sélective d'hydrocarbures dioléfiniques ou acétyléniques.

## Patentansprüche

1. Verfahren zur Herstellung eines Katalysators, dadurch gekennzeichnet, dass er die folgenden Stufen umfasst: man mischt eine Palladiumverbindung mit einem mineralischen Träger, man kalziniert in Anwesenheit eines Sauerstoff enthaltenden Gases; es erfolgt eine Behandlung durch ein Reduktionsmittel, man mischt eine halogenierte Goldverbindung mit dem resultierenden Gemisch, man behandelt mit einem Reduktionsmittel, man behandelt mit einer Verbindung basischer Reaktion, derart, dass der Halogengehalt des Katalysators unter 10 Gew.-ppm (Teile pro Million) gesenkt wird, und man kalziniert in Anwesenheit eines Sauerstoff enthaltenden Gases, wobei die Palladium- und Goldverbindungen in zweckmässigem Anteil derart verwendet werden, dass der Katalysator 0,03 bis 1 Gew.-% Palladium und 0,003 bis 0,3 Gew.-% Gold enthält.

2. Verfahren nach Anspruch 1, dadurch gekennzeichnet, dass die Verbindung mit basischer Reaktion Ammoniak, ein Amin oder Karbonat oder Bikarbonat des Ammoniums, Natriums oder Kaliums ist, wobei die Verbindung in wässeriger Lösung verwendet wird.

3. Verfahren nach Anspruch 2, dadurch gekennzeichnet, dass die Verbindung mit basischer Reaktion Ammoniak in wässeriger Lösung ist.

4. Verfahren nach einem der Ansprüche 1 bis 3, dadurch gekennzeichnet, dass die Kalzinierungsvorgänge bei 100 bis 500°C durchgeführt werden.

5. Verfahren nach einem der Ansprüche 1 bis 4, dadurch gekennzeichnet, dass das Reduktionsmittel Wasserstoff ist, das bei 100 bis 400°C eingesetzt wird.

6. Verfahren nach einem der Ansprüche 1 bis 4, dadurch gekennzeichnet, dass das Reduktionsmittel Ameisensäure oder Hydrazin ist, welches jeweils bei 10 bis 100°C eingesetzt wird.

7. Verfahren nach einem der Ansprüche 1 bis 6, dadurch gekennzeichnet, dass das Palladium in Form von Acetylacetonat eingeführt wird.

8. Verfahren nach einem der Ansprüche 1 bis 7, dadurch gekennzeichnet, dass der Träger ein Aluminiumoxid mit einer Oberfläche zwischen 1 und 100 m²/g ist.

9. Katalysator hergestellt nach dem Verfahren eines der Ansprüche 1 bis 8, der 0,03 bis 1 Gew.-% Palladium und 0,003 bis 0,3 Gew.-% Gold auf einem mineralischen Träger enthält.

10. Anwendung des nach einem der Ansprüche 1 bis 8 hergestellten Katalysators oder des Katalysators nach Anspruch 9 auf eine selektive Hydrierungsreaktion von diolefinischen oder acetylenischen Kohlenwasserstoffen.

## Claims

1. Process for manufacturing a catalyst comprising the steps of: admixing a palladium compound with an inorganic carrier, roasting in the presence of an oxygen-containing gas, treating with a reducing agent, admixing a halogenated gold compound to the resulting composition, treating with a reducing agent, treating with a compound having a basic reaction so as to lower the halogen content of the catalyst below 10 ppm by weight, and roasting, in the presence of an oxygen-containing gas, the palladium and gold compounds being used in convenient proportions so that the catalyst contains 0.03 to 1% palladium and 0.003 to 0.3% gold by weight.

2. A process according to claim 1, wherein the compound having a basic reaction is ammonia, an amine or an ammonium, sodium or potassium carbonate or bicarbonate, said compound being used in aqueous solution.

3. A process according to claim 2, wherein the compound having a basic reaction is ammonia in aqueous solution.

4. A process according to one of claims 1 to 3, wherein the roasting steps are effected at 100-500°C.

5. A process according to one of claims 1 to 4, wherein the reducing agent is hydrogen, used at 100-400°C.

6. A process according to one of claims 1 to 4, wherein the reducing agent is formic acid or hydrazine, used at 10-100°C.

7. A process according to one of claims 1 to 6, wherein palladium is introduced as acetylacetonate.

8. A process according to one of claims 1 to 7, wherein the carrier is an alumina of a surface comprised between 1 and 100 $m^2/g$.

9. Catalyst, obtained according to one of claims 1 to 8, containing by weight 0.03 to 1% of palladium and 0.003 to 0.3% of gold, on a mineral carrier.

10. The use of the catalyst manufactured according to one of the claims 1 to 8 or of the catalyst according to claim 9, in a reaction for the selective hydrogenation of diolefinic or acetylenic hydrocarbons.